(19) Europäisches Patentamt
European Patent Office
Office européen des brevets

(11) **EP 3 074 343 B1**

(12) **EUROPEAN PATENT SPECIFICATION**

(45) Date of publication and mention
of the grant of the patent:
**26.08.2020  Bulletin 2020/35**

(21) Application number: **14864844.7**

(22) Date of filing: **08.10.2014**

(51) Int Cl.:
***C01B 33/143*** (2006.01)          ***D21H 17/13*** (2006.01)
***D21H 21/10*** (2006.01)

(86) International application number:
**PCT/US2014/059724**

(87) International publication number:
**WO 2015/076946 (28.05.2015 Gazette 2015/21)**

(54) **STABLE AQUEOUS COLLOIDAL SILICA PRODUCT, AND METHODS TO MAKE AND USE SAME**

STABILES, WÄSSRIGES, KOLLOIDALES KIESELSÄUREPRODUKT UND VERFAHREN ZUR HERSTELLUNG UND VERWENDUNG DAVON

PRODUIT DE SILICE COLLOÏDALE AQUEUSE STABLE, ET SES PROCÉDÉS DE FABRICATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2013  US 201314089028**

(43) Date of publication of application:
**05.10.2016  Bulletin 2016/40**

(73) Proprietor: **Ecolab USA Inc.**
**St. Paul, MN 55102 (US)**

(72) Inventors:
• **LI, Minghua**
**Bolingbrook, Illinois 60490 (US)**
• **WONG SHING, Jane B.**
**Aurora, Illinois 60504 (US)**
• **MILLER, Raymond D., Jr.**
**Carol Stream, Illinois 60188 (US)**

(74) Representative: **Godemeyer Blum Lenze**
**Patentanwälte**
**Partnerschaft mbB - werkpatent**
**An den Gärten 7**
**51491 Overath (DE)**

(56) References cited:
**WO-A1-00/66491          WO-A1-00/66492**
**WO-A1-00/75074          WO-A1-2008/150230**
**US-A- 2 631 134          US-A- 5 368 833**
**US-A- 5 447 604          US-A1- 2003 065 041**
**US-B1- 6 372 089**

• **KIM, K. D. ET AL.: 'Comparison of the Properties of Silica Fine Particles Prepared by Using Batch and Semibatch Process' JOURNAL OF THE KOREAN INSTITUTE OF CHEMICAL ENGINEERS vol. 38, no. 3, 30 June 2000, pages 398 - 404, XP008183308**

**Description**

**FIELD**

At least one embodiment of the invention is directed to colloidal silica sols having high solids contents and low viscosity, while maintaining high surface area and enhanced stability. It is also directed to a new process involving a semi-batch addition for making such colloidal silica sols and to the use of such colloidal silica sols in a production of paper. At least one embodiment of the invention is directed to an aqueous colloidal silica product, a method of using an aqueous colloidal silica product, and a method of producing an aqueous colloidal silica product. The aqueous colloidal silica product is stable and has a lower viscosity than thought to be achievable for products having a colloidal silica solids concentration ranging from 16-18% by weight (*i.e.,* 16-18% by weight of $SiO_2$ solids) and produced via conventional production methods.

**BACKGROUND**

This present invention is directed to colloidal silica sols having high solids contents and low viscosity, while maintaining high surface area and enhanced stability. It is also directed to a new process involving a semi-batch addition for making such colloidal silica sols and to the use of such colloidal silica sols in a production of paper. WO 00/66492 A1 relates to a process for the production of an aqueous sol containing silica-based particles which comprises (a) acidifying an aqueous silicate solution to a pH of from 1 to 4 to form an acid sol; (b) alkalising the acid sol at an $SiO_2$ content within the range of from 4.5 to 8 % by weight; (c) allowing particle growth of the alkalised sol for at least 10 minutes; or heat-treating the alkalised sol at a temperature of at least 30 DEG C; (d) alkalising the obtained sol to a pH of at least 10.0; and (e) optionally concentrating the sol obtained according to (b), (c) or (d) to provide an aqueous sol containing silica-based particles and having a specific surface area of at least 90 $m^2$/g aqueous sol; as well as an aqueous sol containing silica-based particles obtainable by the process. The invention also relates to an aqueous sol containing silica-based particles which sol has a specific surface area of at least 115 $m^2$/g aqueous sol and an S-value within the range of from 10 to 45 % or contains silica-based particles having a specific surface area of at least 550 and less than 1000 $m^2$/g $SiO_2$. The invention further relates to the use of the aqueous sol containing silica-based particles as a drainage and retention aid in the production of paper as well as a process for the production of paper from an aqueous suspension containing cellulosic fibres, and optional filler, in which silica-based particles and at least one charged organic polymer are added to the cellulosic suspension.

US 6 372 089 A1 discloses stable, aqueous colloidal silicas having surface area of greater than 700 $m^2$/g and S-values of from 20-50. These colloidal silicas do not require treatment with surface treatment agents such as aluminum to achieve stability. These colloidal silica aquasols can be produced and stored at concentrations of greater than 7 percent by weight $SiO_2$ solids, and even as high as 15 percent by weight solids or higher, and remain stable at room temperature for at least 30 days compared to art-known silica aquasols. These colloidal silica sols demonstrate advantageously improved performance over art-known colloidal silica sols in applications such as in drainage and retention in papermaking processes. Also disclosed are processes for making aqueous colloidal silicas of the invention and the use of such colloidal silicas in papermaking processes.

The colloidal silica sols of the present invention uniquely exhibit high solids contents in the range between 16 to 18% by weight of $SiO_2$ solids, with viscosity ranging from 4 to 20 mPas (cps), while the said colloidal silica sols still maintain high surface area and enhanced stability without modification of the surface with, for example, aluminum. Moreover the colloidal sols of the invention is prepared via a new semi-batch process, which is different from conventional silica sols process such as described in U.S. Pat. Nos. 6,372,806 and 6,372,089. Furthermore, the colloidal silica sols of the present invention advantageously exhibit excellent activity in many papermaking furnishes. The silica sols of present invention are useful, among other areas, in the papermaking industry, for example, as retention and dewatering aids.

In contrast, the present invention provides a stable composition of colloidal silica sols that have concentration ranging from 16 to 18 percent by weight of $SiO_2$ solids with low viscosity ranging from 4 to 20 mPas (cps), which is not in the teachings of the above reference patents. The present invention provides stable silica colloidal sols with high surface area and enhanced stability without modify the surface with aluminum, as described in U.S. Pat. 5,368,833.

**BRIEF SUMMARY**

A first embodiment according to the invention is directed to a stable aqueous colloidal silica product according to claim 1. The colloidal silica sols can be produced and stored at concentrations of 16 to 18 percent by weight of $SiO_2$ solids. The aqueous colloidal silica product has a viscosity ranging from 4 to 20 mPas (cps) and an S-value ranging from 26 to 40%. The colloidal silica solids have a specific surface area ranging from 750 to 850 $m^2$/g.

A second embodiment according to the invention is directed to a method of producing an aqueous colloidal silica product according to claim 5. The method comprises, first, adding a first quantity of alkali metal silicate to water and a partially regenerated cationic ion exchange resin under agitation, thereby forming a first intermediate composition comprising a first portion of aqueous colloidal silica product, wherein the first intermediate composition has a temperature ranging from 38 to 71 °C (100 to 160 degrees Fahrenheit) and a pH ranging from 8 to 14, and the first quantity of alkali metal silicate is added at a first rate sufficient to allow the first addition to last for 1 to 45 minutes. Second, after 0 to 90 minutes, adding a second quantity of alkali metal silicate to the first intermediate composition under agitation, thereby forming a second intermediate composition comprising a second portion of aqueous colloidal silica product, wherein the second intermediate composition has a temperature ranging from 38 to 71 °C (100 to 160 degrees Fahrenheit) and a pH ranging from 9 to 11, and the second quantity of alkali metal silicate is added at a second rate sufficient to allow the second addition to last for 5 to 120 minutes; after 0 minutes to 24 hours, separating the first and second portions of aqueous colloidal silica products from the second intermediate composition, thereby producing the aqueous colloidal silica product; wherein the first quantity and the second quantity comprise a total quantity, the first quantity ranging from 60 to 95 weight percent of the total quantity.

A third embodiment according to the invention is directed to a method of making a cellulosic sheet according to claim 10. The method comprises preparing a cellulosic furnish containing from 0.01 to 1.5 weight percent cellulosic fiber. An amount of aqueous colloidal silica product as described in the first exemplary embodiment is added to the cellulosic furnish. The amount of aqueous colloidal silica product is sufficient to achieve a concentration of colloidal silica solids of from 0.00005 to 1.5 weight percent per dry weight of fiber in the cellulosic furnish. An amount of a water soluble polymeric flocculant is added to the cellulosic furnish. The amount of water soluble polymeric flocculant is sufficient to achieve a concentration of water soluble polymeric flocculant of from 0.001 to 5 weight percent per dry weight of fiber in the cellulosic furnish. The water soluble polymeric flocculant has a molecular weight ranging from 500,000 to 30 million daltons. The cellulosic furnish is then dewatered to obtain a cellulosic sheet.

## BRIEF DESCRIPTION OF THE DRAWINGS

The advantages of the present disclosure will become more readily apparent to those of ordinary skill in the relevant art after reviewing the following detailed description and accompanying drawing, wherein:

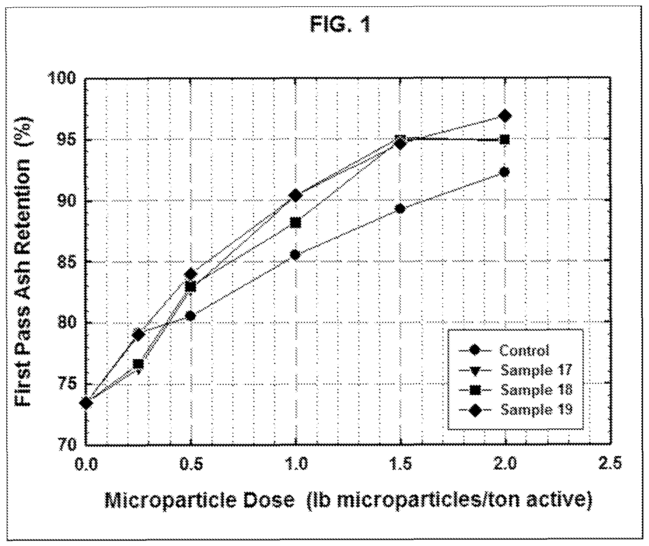

**FIG. 1** is a graph illustrating the improved first pass ash retention of three batches that incorporate the inventive aqueous colloidal silica product of the present disclosure, as compared to a control sample.

## DETAILED DESCRIPTION

While embodiments encompassing the general inventive concepts may take various forms, there will hereinafter be described various embodiments with the understanding that the present disclosure is to be considered merely an exemplification, and the general inventive concepts are not intended to be limited to the disclosed embodiments.

All percentages, parts and ratios as used herein, are by weight of the total product, unless specified otherwise. All such weights as they pertain to listed ingredients are based on the active level and, therefore, do not include solvents or by-products that may be included in commercially available materials, unless specified otherwise.

All ranges and parameters, including but not limited to percentages, parts, and ratios, disclosed herein are understood to encompass any and all sub-ranges assumed and subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more (*e.g.,* 1 to 6.1) and ending with a maximum value of 10 or less (*e.g.,* 2.3 to 9.4, 3 to 8, 4 to 7), and finally to each number 1, 2, 3, 4, 5, 6, 7, 8, 9, and 10 contained within the range.

Ordinal numbers (e.g., first, second, third, etc.) may be utilized herein to describe various aspects of the present disclosure that may be similar. For example, two adding steps may be defined using ordinal numbers (e.g., "first adding" and "second adding"). When utilized, the ordinal numbers are used for the purposes of differentiating one element from another similarly-named element, thereby allowing for clarity in referencing the similarly-named elements. The ordinal numbers should not be construed as necessarily limiting the order of elements, unless clearly defined by the context of the disclosure.

The various embodiments of the compositions and products of the present disclosure may also be substantially free of any optional ingredient or feature described herein, provided that the remaining composition or product still contains all of the required ingredients or features as described herein. In this context, and unless otherwise specified, the term "substantially free" means that the selected composition or product contains less than a functional amount of the optional ingredient, typically less than 1%, including less than 0.5%, including less than 0.1%, and also including zero percent, by weight of such optional ingredient.

The compositions and products may comprise, consist of, or consist essentially of the required elements of the products as described herein, as well as any additional or optional element described herein or otherwise useful in product applications.

The term "aqueous" as used herein, unless otherwise specified, is intended to be construed as a modifier that means "water-containing" or "in water," as opposed to "oil-containing" or "in oil." For purposes of this disclosure, "water" refers to liquid water. An aqueous composition may be liquid water, a solution having liquid water as a solvent, or a slurry of solids in liquid water. Notably, a silica sol is an aqueous composition, as it comprises colloidal silica solids in liquid water.

The term "colloid" as used herein, unless otherwise specified, is intended to be construed as a substance containing ultra-small particles substantially evenly dispersed throughout another substance. The colloid consists of two separate phases: a dispersed phase (or internal phase) and a continuous phase (or dispersion medium) within which the dispersed phase particles are dispersed. The dispersed phase particles may be solid, liquid, or gas. The dispersed-phase particles may have a diameter ranging from 1 to 1,000,000 nanometers. The colloid may be substantially affected by the surface chemistry present in the dispersed-phase particles. An exemplary embodiment of a colloid is an aqueous colloidal silica product. Exemplary embodiments of dispersed-phase particles are colloidal silica solids.

The term "colloidal silica" as used herein, unless otherwise specified, is intended to be construed as a colloid in which the primary dispersed-phase particles comprise silicon containing molecules. This definition includes the full teachings of the reference book: The Chemistry of Silica: Solubility, Polymerization, Colloid and Surface Properties and Biochemistry of Silica, by Ralph K. Iler, John Wiley and Sons, Inc. (1979), in general, and particularly pages 312-599. When the particles have a diameter of above 100 nm, the particles may be referred to as "sols," "silica sols," "aquasols," or "nanoparticles."

The term "product" as used herein, unless otherwise specified, is intended to be construed as a substance that is created from a chemical reaction or a series thereof and capable of being utilized as an ingredient in a manufacturing process. As used herein, a "product" is generally a portion of the composition that results from the chemical reaction or series thereof.

The term "aqueous colloidal silica product" (or "AqCSP") as used herein, unless otherwise specified, is intended to be construed as a homogenous mixture with dispersed silica particles/aggregates in aqueous phase that were created from a chemical reaction or a series thereof, and capable of being utilized as an ingredient in a manufacturing process, particularly in a papermaking process. In certain embodiments, an "aqueous colloidal silica product" is a silica sol.

The term "silica sol" as used herein, unless otherwise specified, is intended to be construed as a homogenous aqueous mixture composition containing colloidal silica particles or aggregates.

In the event that the above definitions or a description stated elsewhere in this application is inconsistent with a meaning (explicit or implicit) which is commonly used or in a dictionary, the application and the claim terms in particular are understood to be construed according to the definition or description in this application, and not according to the common definition or dictionary definition. In light of the above, in the event that a term can only be understood if it is construed by a dictionary, if the term is defined by the Kirk-Othmer Encyclopedia of Chemical Technology, 5th Edition, (2005), (Published by Wiley, John & Sons, Inc.) this definition shall control how the term is to be defined in the claims.

In at least one embodiment colloidal silica sols uniquely exhibit high solids contents in the range between 16 to 18% by weight of $SiO_2$ solids, with viscosity ranging from 4 to 20 mPas (cPs), while the said colloidal silica sols still maintain high surface area and enhanced stability without modification of the surface with, for example, aluminum. Moreover the colloidal sols of the invention is prepared via a new semi-batch process, which is different conventional silica sols process such as described in US Patents 5,368,833, 6,372,806 and 6,372,089. Furthermore, the colloidal silica sols of the present invention advantageously exhibit excellent activity in many papermaking furnishes. The silica sols of present invention are useful, among other areas, in the papermaking industry, for example, as retention and dewatering aids.

At least one embodiment is a stable composition of colloidal silica sols that have concentration ranging from 16 to 18 percent by weight of $SiO_2$ solids with low viscosity ranging from 4 to 20 mPas (cps), which is not accomplished according to the teachings of the above reference patents. In particular the sol may exclude the presence of aluminum yet has as high or higher surface area and/or is as stable, or more stable than those sols described in US Patent 5,368,833.

At least one embodiment is directed to an aqueous colloidal silica product. The aqueous colloidal silica product comprises water and from 16 to 18 weight percent colloidal silica solids. The aqueous colloidal silica product has a viscosity ranging from 4 to 20 mPas (cps) and an S-value ranging from 26 to 40%. The colloidal silica solids have a specific surface area ranging from 700 to 850 $m^2/g$.

At least one embodiment is directed to a method of producing an aqueous colloidal silica product. The method comprises, first, charging a reaction vessel with a cationic ion exchange resin having at least 40 percent, preferably at least 50 percent of its ion exchange capacity in the hydrogen form wherein the reaction vessel has for example a screen near the bottom of the reaction vessel, for separating the colloidal silica formed during the process from ion exchange resin. Second, charging the reaction vessel with water and stirring the contents of the reaction vessel. Third, adjusting the temperature of the contents of the said reaction vessel to be in the range from 21.22 to 93.33° C (70 to 200 degrees Fahrenheit), preferably in the range from 100 to 160 degrees Fahrenheit. Fourth, adding a first quantity of alkali metal silicate to the said water and cationic ion exchange resin under agitation, thereby forming a first intermediate composition comprising a first portion of aqueous colloidal silica product. Fifth, after 0 to 90 minutes, a second quantity of alkali metal silicate is added to the first intermediate composition under agitation, thereby forming a second intermediate composition comprising a second portion of aqueous colloidal silica product. After 0 minutes to 24 hours, the first and second portions of aqueous colloidal silica products are separated from the second intermediate composition, thereby producing the aqueous colloidal silica product. The first and second quantity of alkali metal silicate comprise a total quantity, with the first quantity ranging from 60 to 95 weight percent of the total quantity. The first intermediate composition has a temperature ranging from 21.22 to 93.33° C (70 to 200 degrees Fahrenheit) and a pH ranging from 8 to 14. The first quantity of alkali metal silicate is added at a first rate sufficient to allow the first addition to last for 1 to 45 minutes. The second intermediate composition has a temperature ranging from 21.22 to 93.33° C (70 to 200 degrees Fahrenheit) and a pH ranging from 9 to 11. The second quantity of alkali metal silicate is added at a second rate sufficient to allow the second addition to last for 5 to 120 minutes.

At least one embodiment is directed to a method of making a cellulosic sheet. The method comprises preparing a cellulosic furnish containing from 0.01 to 1.5 weight percent cellulosic fiber. An amount of aqueous colloidal silica product as described in the first exemplary embodiment is added to the cellulosic furnish. The amount of aqueous colloidal silica product is sufficient to achieve a concentration of colloidal silica solids of from 0.00005 to 1.5 weight percent per dry weight of fiber in the cellulosic furnish. An amount of a water soluble polymeric flocculant is added to the cellulosic furnish. The amount of water soluble polymeric flocculant is sufficient to achieve a concentration of water soluble polymeric flocculant of from 0.001 to 5 weight percent per dry weight of fiber in the cellulosic furnish. The water soluble polymeric flocculant has a molecular weight ranging from 500,000 to 30 million daltons. The cellulosic furnish is then dewatered to obtain a cellulosic sheet.

At least one embodiment is directed to an aqueous colloidal silica product having certain chemical and physical characteristics. While a person of skill in the art will readily recognize that the methods of the second exemplary embodiment may be used to produce the first exemplary embodiment, the first exemplary embodiment should not be construed as limited to the method of the second exemplary embodiment. In other words, the aqueous colloidal silica product may be produced by methods that differ from those of the second embodiment.

In at least one embodiment the aqueous colloidal silica product comprise colloidal silica solids at a concentration ranging from 16 to 18 weight percent, or 16 to 17, or 17 to 18, of the aqueous colloidal silica product. In certain exemplary embodiments, the aqueous colloidal silica product comprises colloidal silica solids at a concentration of at least 16 weight percent, or at least 16.2 weight percent, or at least 16.5 weight percent, or at least 16.6 weight percent, or at least 16.7 weight percent, or at least 16.8 weight percent, or at least 16.9 weight percent, or at least 17 weight percent, up to 18 weight percent.

Viscosity of the aqueous colloidal silica product is a parameter that can be important to the manufacturers and users of aqueous colloidal silica products. The aqueous colloidal silica products need to flow through the cationic resin bed and pipes with relative ease in order to be useful in manufacturing processes. According to the first exemplary embodiment of the present disclosure, the aqueous colloidal silica product has a viscosity ranging from 4 to 20 mPas (cps). In certain embodiments, the aqueous colloidal silica product has a viscosity of at least 4 mPas (cps), and up to 20 mPas (cps), or up to 18 mPas (cps), or up to 15 mPas (cps), or up to 12 mPas (cps), or up to 10 mPas (cps), or up to 8 mPas (cps). In certain embodiments, the aqueous colloidal silica product has a viscosity ranging from 4 to 18 mPas (cps), or 4 to 15 mPas (cps), or 4 to 10 mPas (cps).

The S-value of the aqueous colloidal silica product is another parameter that may be monitored and reported to users of aqueous colloidal silica products. S-value is a quantification of the degree of microaggregation of colloidal materials. The exact definition of S-value can be found in The Chemistry of Silica: Solubility, Polymerization, Colloid and Surface Properties and Biochemistry of Silica, by Ralph K. Iler, John Wiley and Sons, Inc. (1979). According to the first exemplary embodiment of the present disclosure, the aqueous colloidal silica product has an S-value ranging from 26 to 40%. In certain embodiments, the aqueous colloidal silica product has an S-value of at least 26%, or at least 27%, or at least 28%, or at least 29%, and up to 40%, or up to 39%, or up to 38%, or up to 37%, or up to 36%, or up to 35%, or up to 34%, or up to 33%, or up to 32%, or up to 31%, or up to 30%. In certain embodiments, the aqueous colloidal silica product has an S-value ranging from 28 to 40%, or 29 to 39%.

Specific surface area of the colloidal silica solids in an aqueous colloidal silica product is a parameter that may be monitored and reported to users of the aqueous colloidal silica product. Specific surface area is reported in units of area per weight or mass of a substance (e.g., $m^2/g$). The first exemplary embodiment of the present disclosure comprises colloidal silica solids having a specific surface area ranging from 700 to 850 $m^2/g$. In certain embodiments, the aqueous colloidal silica product comprises colloidal silica solids having a specific surface area of at least 700 $m^2/g$, or at least 750 $m^2/g$, or at least 800 $m^2/g$, and up to 850 $m^2/g$. In certain embodiments, the colloidal silica solids of the aqueous colloidal silica product have a specific surface area ranging from 750 to 850 $m^2/g$, or 800 to 850 $m^2/g$. According to the invention, the colloidal silica solids have a specific surface area ranging from 750 to 850 m$^2$/g.

The aqueous colloidal silica products may be considered to be stable for at least 30 days. In certain embodiments, the aqueous colloidal silica product is stable for at least 60 days, or at least 90 days, or at least 120 days, or at least 180 days, and, in certain embodiments, up to 360 days or more. In certain embodiments, the aqueous colloidal silica product is stable for 30 to 360 days, or from 60 to 360 days, or from 90 to 360 days, or 120 to 360 days, or 180 to 360 days. By "stable," it is meant that the aqueous colloidal silica product retains its physical and chemical properties related to one or more of weight percent colloidal silica solids, viscosity, S-value, and specific surface area at least at the broadest levels defined herein, even in the event that the aqueous colloidal silica product is no longer agitated. In other words, the aqueous colloidal silica product does not substantially degrade or lose its ability to be used in a manufacturing process, such as a papermaking process.

Aluminum or aluminum-containing compounds are sometimes added to aqueous colloidal silica products to treat the surface area of the colloidal silica solids, thereby stabilizing the aqueous colloidal silica product. The embodiments of the aqueous colloidal silica product disclosed herein are generally aluminum-free and do not need to be treated with aluminum or aluminum-containing compounds in order to maintain their stability. In certain embodiments, the aqueous colloidal silica product is aluminum-free and stable for at least 30 days, or at least 60 days, or at least 90 days, or at least 120 days, or at least 180 days, and up to 360 days. In certain embodiments, the aqueous colloidal silica product is stable for 30 to 360 days, or from 60 to 360 days, or from 90 to 360 days, or 120 to 360 days, or 180 to 360 days. The term "aluminum-free" indicates that the aqueous colloidal silica product contains no more than trace amounts of aluminum or aluminum-containing compounds, e.g., less than 500 ppm aluminum.

In certain embodiments of the aqueous colloidal silica product, the aqueous colloidal silica product further comprises an alkali metal or alkali metal-containing compound. The alkali metal or alkali metal-containing compound may be in the form of an alkali metal ion, an alkali metal oxide, an alkali metal silicate, an alkali metal salt, or another form known to those of skill in the art. A suitable alkali metal-containing compound used to make certain embodiments of the aqueous colloidal silica product is an alkali metal silicate, as described herein. Exemplary embodiments of alkali metals that may be present in the aqueous colloidal silica product include sodium, potassium, lithium and combinations thereof. Certain embodiments of the aqueous colloidal silica product further comprise a sodium-containing compound.

In embodiments of the aqueous colloidal silica product that further comprise an alkali metal or alkali metal-containing compound, the alkali metal or alkali metal-containing compound may be present in the aqueous colloidal silica product in an amount sufficient to provide a molar ratio of silica to alkali metal ranging from 5:1 to 50:1, or 5:1 to 30:1, or 5:1 to 25:1, or 5:1 to 20:1, or 5:1 to 15:1. In certain embodiments, the aqueous colloidal silica product has a molar ratio of SiO$_2$ to alkali metal of at least 8:1 and up to 50:1, or up to 30:1, or up to 25:1, or up to 20:1, or up to 15:1.

Certain embodiments of the aqueous colloidal silica product have a pH ranging from 9 to 11. The pH of the aqueous colloidal silica product may further range from 10 to 11.

At least one embodiment is directed to a method of producing an aqueous colloidal silica product. In an embodiment any of the above method(s) may be utilized to produce the aqueous colloidal silica product of the first exemplary embodiment of the present disclosure. However, the above methods are not limited so as to only produce only the above aqueous colloidal silica product. Furthermore, because the addition of the alkali metal silicate is performed in two steps, the method of producing an aqueous colloidal silica product may be described as "semi-batch" as opposed to "batch."

In at least one embodiment a first quantity of alkali metal silicate is added to water and a partially regenerated cationic ion exchange resin under agitation and at a temperature ranging from 21.22 to 93.33° C (70 to 200 degrees Fahrenheit), thereby forming a first intermediate composition comprising a first portion of aqueous colloidal silica product. The first intermediate composition has a pH of 8 to 14, or 8 to 12, or 9 to 11, and in certain embodiments, a pH of at least 8, or at least 9 or at least 10, and up to 14, or up to 13, or up to 12, or up to 11. The first quantity of alkali metal silicate is added to the water and cationic ion exchange resin at a rate sufficient to allow the addition to last for 1 to 45 minutes, or 2 to 30 minutes, and in certain embodiments, for at least 1, or at least 2 minutes, and up to 45, or up to 30, or up to 20, or up to 10 minutes.

After the first quantity of the alkali metal silicate is added, a second quantity of alkali metal silicate is added to the first intermediate composition under agitation and at a temperature ranging from 21.22 to 93.33° C (70 to 200 degrees Fahrenheit), thereby forming a second intermediate composition comprising a second portion of aqueous colloidal silica product. The second quantity may be added at any time from just after the addition of the first quantity of alkali metal silicate is completed *(e.g.,* 0 minutes), up to 90 minutes after the addition of the first quantity. The second intermediate composition has a pH ranging from 8 to 11, or from 9 to 11. The second quantity of alkali metal silicate is added at a second rate sufficient to allow the addition to last for 5 to 120 minutes, or 10 to 60 minutes, and in certain embodiments, for at least 5 minutes, or at least 10 minutes, or at least 15 minutes, up to 120 minutes, or up to 90 minutes, or up to 60 minutes, or up to 45 minutes, or up to 30 minutes.

In certain embodiments of the method of producing an aqueous colloidal silica product, the second intermediate composition is allowed to agitate for 0 minutes to 24 hours, and in certain embodiments for at least 0 minutes, or at least 15 minutes, or at least 30 minutes, up to 24 hours, or up to 18 hours, or up to 12 hours, or up to 6 hours, or up to 3 hours, or up to 2 hours. In certain embodiments of the method of producing the aqueous colloidal silica product, the first or second intermediate products, or both, may be agitated in any one or multiple manners known to the person of skill in the art, including, but not limited to, impeller or paddle mixing, recirculation, air sparging, vibration, vessel shaking, and combinations thereof.

After 0 minutes to 24 hours of agitation, the first and second portions of aqueous colloidal silica product are separated from the second intermediate composition, thereby producing the aqueous colloidal silica product. In certain embodiments, the separation of the aqueous colloidal silica product from the second intermediate composition is performed using filtration.

In at least one embodiment, the filtration is performed using another type of liquid/solid separating device constructed and arranged to remove suspended material from a liquid carrier medium. This may be accomplished by any filtration device such as a screen, slotted/perforated pipe, membrane or similar crude filtration device, or combinations thereof. Representative examples include but are not limited to sand filters, filter paper, membrane filters, RO, NF, UF, MF, submerged filters, pressure filters, (centrifuges, cyclones, hydrocyclones, electrostatic precipitators, gravity separators, mist eliminators, screeners, steam traps, absorbers, adsorbers, biofilters, crystalizers, dehumidifiers, distillation columns, dryers, evaporators, extractors, humidifiers, ion exchange columns, strippers), and any combination thereof. In at least one embodiment the filter includes one or more of the filtration techniques disclosed in paper Terminology for Membranes and Membrane Processes, by WJ Koros et al., Journal of Membrane Science, Vol. 120 pp. 149-159 (1996). In at least one embodiment the filter comprises any one or more of the chemical separation processes described on the website: http://encyclopedia.che.engin. umich.edu/Pages/SeparationsChemical/SeparationsCh emical.html (as accessed on October 17, 2013) and/or any one or more of the mechanical processes described on the website: http://encyclopedia.che.engin. umich.edu/Pages/SeparationsMechanical/Separations Mechanical.html (as accessed on October 17, 2013). Membrane filter may be made of polymeric, ceramic, steel or glass materials.

According to an embodiment, in the method of producing, e.g., aqueous colloidal silica product, the first quantity and the second quantity of alkali metal silicate comprise a total quantity, with the first quantity ranging from 60 to 95 weight percent, or 65 to 90 weight percent, or 70 to 80 weight percent, of the total quantity, and in certain embodiments being at least 60 weight percent, or at least 65 weight percent, or at least 70 weight percent, up to 95 weight percent, or up to 90 weight percent, or up to 85 weight percent or up to 80 weight percent, or up to 75 weight percent of the total quantity.

Generally, the alkali metal silicate (both the first and second quantities thereof) that is added in the method of the second exemplary embodiment is selected from the group consisting of sodium silicate, potassium silicate, lithium silicate and combinations thereof. In certain embodiments, the alkali metal silicate is sodium silicate. While the first and second quantities of alkali metal silicate are generally the same composition (e.g., generally having the same chemical composition, same physical properties, same impurities, etc.), the first and second quantities can in theory be compositions having differing physical or chemical characteristics. For example, the first quantity is sodium silicate and the second quantity is potassium silicate. In certain embodiments, the first and second quantities of the alkali metal silicate are the same composition. For example, the first quantity is sodium silicate and the second quantity is the same type of sodium silicate.

While the quality of the starting ingredients *(i.e.,* alkali metal silicate, cationic ion exchange resin, water, etc.) may provide some variation in the aqueous colloidal silica product, the method has unexpectedly produced aqueous colloidal silica product having properties particularly beneficial to the papermaking industry, for example as retention and dewatering aids. The alkali metal silicate can be any number of conventional materials, such as water glasses. The mole ratio of $SiO_2$ to $Na_2O$, or $K_2O$, or $Li_2O$, or combination of $Na_2O$, $K_2O$ and $Li_2O$, in the alkali metal silicate, can be in the range from 15:1 to 1: 1 and is preferably within the range from 2.5:1 to 3.9:1. Such alkali metal silicate solution typically will have a pH in excess of 10, typically at least 11. Such alkali metal may contain impurities, include but not limited to aluminum, iron, calcium, magnesium, chloride, and sulfate ions. The solids contains in the said alkali metal silicate can in the range from 15 to 40 percent by weight as $SiO_2$.

The water used in producing the aqueous colloidal silica product is not particularly limited and may be any reasonably soft fresh water *(i.e.,* not brine and having less than 2000 $\mu$S/cm conductance). In certain embodiments, the water is tap water, well water, distilled water, deionized water, otherwise purified water, or any combination thereof.

The cationic ion exchange resin utilized in the methods of the second exemplary embodiment is not particularly limited. In certain embodiments, the cationic ion exchange resin is preferable to be a weak acid cationic resin, includes but not limited to, Amberlite® IRC84SP.

In certain embodiments, the cationic ion exchange resin may be reused from previous production processes after regeneration. The cationic ion exchange resin may be regenerated using an organic or mineral acid. Exemplary embodiments of acids that may be used to regenerate the cationic ion exchange resin include, but are not limited to, the following: sulfuric acid, hydrochloric acid, phosphoric acid, or such materials as carbon dioxide, and combinations thereof. Examples of suitable organic acids include but are not limited to: acetic acid, formic acid and propionic acid. In certain embodiments, mineral and organic salts may be used as a weak acid to regenerate the resin or be used to reduce the colloidal silica product viscosity. Example of suitable salts includes but not limited to: sodium sulfate, sodium acetate, potassium sulfate, potassium acetate, trisodium phosphate and sodium monohydrogen phosphate.

While the cationic ion exchange resin has an ion exchange capacity in the hydrogen form that is not particularly limited, in certain embodiments, the cationic ion exchange resin has an ion exchange capacity of 40 to 100%, or 50 to 100% or 60 to 100%, and in certain embodiments at least 40%, or at least 50%, or at least 60%, in the hydrogen form.

Unexpectedly, methods according to the second embodiment have been shown to be capable of producing an aqueous colloidal silica product having from 16 to 18 weight percent colloidal silica solids, a viscosity ranging from 4 to 20 mPas (cps), an S-value ranging from 26 to 40%, and with colloidal silica solids having a specific surface area ranging from 750 to 850 $m^2/g$, all without using silicic acid or ultrafiltration.

In certain embodiments of the second exemplary embodiment, the first or second intermediate composition, the aqueous colloidal silica product, or any, or all of the aforementioned have a pH ranging from 8 to 11, and the pH may further range from 9 to 11.

In certain embodiments of the second exemplary embodiment, the first and second intermediate compositions have temperatures ranging from 100 to 160 degrees Fahrenheit.

In certain embodiments of the second exemplary embodiment, the first rate of adding the alkali metal silicate is sufficient to allow the addition of the first quantity of alkali metal silicate to last from 1 to 45 minutes. In certain embodiments of the second exemplary embodiment, the second rate of adding the alkali metal silicate is sufficient to allow the addition of the second quantity of alkali metal silicate to last from 5 to 120 minutes.

The aqueous colloidal silica product described herein may be used in any one or more of several manufacturing processes, including, but not limited to, the following: papermaking processes, for example, retention and drainage, pulp dewatering; water treatment and wastewater treatment processes, for example sludge dewatering, clarification and dewatering of aqueous mineral slurries, refinery emulsion breaking and the like; food and beverage processes, for example, for beer, wine, juice, and sugar clarification. The aqueous colloidal silica product described herein is particularly suited for use in the papermaking process.

The method may be used according to any one, some, or all, of the methods and processes for utilizing colloidal silica as described in the Handbook for Pulp and Paper Technologists, by Gary A. Smook, Angus Wilde Publicatiosn Inc., (2001). In addition, the aqueous colloidal silica product can be added to a cellulosic furnish at the wet end of the papermaking process, thereby enhancing the retention of filler ("ash") in the cellulosic furnish, and consequently in the cellulosic sheet, while further aiding in the drainage of water from the cellulosic furnish.

At least one embodiment of the present disclosure is directed to a method of making a cellulosic sheet. The method comprises preparing a cellulosic furnish containing from 0.01 to 1.5 weight percent cellulosic fiber based upon the total weight of the cellulosic furnish (i.e., including water). An amount of an aqueous colloidal silica product as described herein, and an amount of a water soluble polymeric flocculant, is added to the cellulosic furnish. The amount of the aqueous colloidal silica product added to the cellulosic furnish is sufficient to achieve a concentration of colloidal silica solids of from 0.00005 to 1.5 weight percent per dry weight of fiber in the cellulosic furnish. In other words, for every 45.35 kg (100 lbs) of fiber (dry weight) in the cellulosic furnish, 0.00002 to 0.68 kg (0.00005 to 1.5lbs) of colloidal silica solids will be present. The amount of the water soluble polymeric flocculant added to the cellulosic furnish is sufficient to achieve a concentration of water soluble polymeric flocculant of from 0.001 to 5 weight percent per dry weight of fiber in the cellulosic furnish. The water soluble polymeric flocculant has a molecular weight ranging from 500,000 to 30 million daltons. The cellulosic furnish is then dewatered in a fashion known by those of skill in the art to thereby obtain a cellulosic sheet. A cationic starch may alternatively be added to the furnish in place of, or in addition to the synthetic polymer flocculant in an amount of from 0.005 to 5.0 percent by weight based on the dry weight of fiber in furnish. More preferably, the starch is added in an amount of from 0.5 to 1.5 percent by weight based on the dry weight of fiber in the furnish. In yet another embodiment, a coagulant may be added to the furnish in place of, or in addition to, the flocculant and/or the starch in an amount of from 0.005 to 1.25 percent by weight based on the dry weight of fiber in the papermaking furnish. Preferably, the coagulant is added in an amount of from 0.025 to 0.5 percent by weight based on the dry weight of fiber in the furnish.

In certain embodiments of the method of making the cellulosic sheet, the aqueous colloidal silica product is added to the cellulosic furnish.

Non-limiting examples of water soluble polymeric flocculants suitable for use in certain embodiments according to the third exemplary embodiment include cationic, anionic, amphoteric, and zwitterionic polymers. Examples of cationic water soluble polymer flocculants include cationized starch, and homopolymers and copolymers comprising the following monomers: dimethylaminoethyl methacrylate ("DMAEM"), dimethylaminoethyl acrylate ("DMAEA"), diethylaminoethyl acrylate ("DEAEA"), diethylaminoethyl methacrylate ("DEAEM"), or their quaternary ammonium forms made with dimethyl sulfate or methyl chloride; mannich reaction modified polyacrylamides; diallylcyclohexylamine hydrochloride ("DACHA HCl"); diallyldimethylammonium chloride ("DADMAC"); methacrylamidopropyltrimethylammonium chloride ("MAPTAC"); and allyl amine ("ALA").

In certain embodiments, the amount of the aqueous colloidal silica product added to the cellulosic furnish is sufficient to achieve a colloidal silica solids concentration of 0.00005 to 1.5 weight percent, or 0.0005 to 1 weight percent, or 0.005 to 0.05 weight percent, per dry weight of fiber in the cellulosic furnish, and in certain embodiments from at least 0.00005, or at least 0.0005, or at least 0.005, or at least 0.05, up to 0.5, or up to 1, or up to 1.5 weight percent per dry weight of fiber in the cellulosic furnish.

First pass ash retention ("first pass ash retention" or "FPAR") is a parameter that is important to papermakers when determining filler retention in the cellulosic furnish, and consequently in the cellulosic sheet. Aqueous colloidal silica product added to the cellulosic furnish allows for increased first pass ash retention, while not detrimentally affecting the water drainage from the cellulosic furnish. In fact, the aqueous colloidal silica product of the present disclosure has been found to aid in water drainage from the cellulosic furnish.

Furthermore, the first pass ash retention can be used to calculate a first pass ash retention replacement ratio, which is a ratio of the amount of microparticle dose needed to achieve an equivalent first pass ash retention when utilizing the aqueous colloidal silica product of the present disclosure as compared to when utilizing an aqueous colloidal silica product produced using the batch process known in the art (such as US Patents 6,372,089 and 6,372,806). The first pass ash retention replacement ratio is illustrated in Equation 1 below:

$$\text{FPAR Replacement Ratio} = \frac{\text{Microparticle Dose for Cellulosic Sheet Utilizing Inventive AqCSP to achieve x FPAR}}{\text{Microparticle Dose for Cellulosic Sheet Utilizing Batch AqCSP to achieve x FPAR}} \quad (1)$$

As can be deduced from Equation 1 and as illustrated in FIG. 1, improvement in the first pass ash retention is shown when the FPAR replacement ratio is less than one. For cellulosic sheets utilizing a "batch" aqueous colloidal silica product and achieving a first pass ash retention of 90%, the microparticle dose required to achieve the 90% FPAR is approximately 0.72 kg (1.6 lb) of microparticles per ton of cellulosic furnish, based on dry cellulosic fibers. In certain embodiments, cellulosic sheets incorporating the aqueous colloidal silica product of the present disclosure, and at the same colloidal silica solids amount per dry weight of fiber, has been shown to be capable of achieving a 90% FPAR at 0.40 to 0.54 kg (0.9 to 1.2 lb) of microparticles per ton dry weight of fiber in the cellulosic furnish. Thus, in certain embodiments, the FPAR replacement ratio for a cellulosic sheet incorporating the inventive aqueous colloidal silica product ranges from 0.5 to 0.8.

## EXAMPLES

The foregoing may be better understood by reference to the following examples, which are presented for purposes of illustration and are not intended to limit the scope of the invention. In particular the examples demonstrate representative examples of principles innate to the invention and these principles are not strictly limited to the specific condition recited in these examples. Example 1:

Preparation of a Colloidal Silica Sol of the Invention. Inventive aqueous colloidal silica products (Samples 7-15 in Table 1) were prepared using the lab-scale semi-batch procedure described as follows. Charge a reaction vessel with 600 mL of Amberlite® IRC84SP ion exchange resin (available from Dow) in its sodium form. Following manufacturer's procedure for regenerating the resin to the hydrogen form such that the regeneration is at least 40 percent complete. Rinse the resin clean with water and drain the water. Charge 190-380 grams of water into the vessel and start mixing the contents of the vessel to suspend the resin. Next, heat the contents of the reactor to 37.77-71.11° C (100-160 degrees F). Charge the reaction vessel (over a period of about 2-20 minutes) with 186-505 grams of sodium silicate (having a mole ratio of $SiO_2$ to $Na_2O$ of 3.26 and a pH of 11.2). After 1-45 min, charge the reaction vessel (over a period of about 5-30 minutes) with 13-160 grams of sodium silicate. Stir the contents in the reaction vessel for another 10-180 minutes. Then, remove the contents from the reaction vessel and separate the colloidal silica product from ion exchange resin via a filter bag.

Preparation of a Colloidal Silica Sol using conventional batch process. For comparative samples produced using the batch method (Comparative Sample 1-6). Charge a reaction vessel with 600 mL of Amberlite® IRC84SP ion exchange resin (available from Dow) in its sodium form. Following manufacturer's procedure for regenerating the resin to the hydrogen form such that the regeneration is at least 40 percent complete. Rinse the resin clean with water and drain the water. Charge 190-380 grams of water into the vessel and start mixing the contents of the vessel to suspend the resin. Next, heat the contents of the reactor to 37.77-71.11° C (100-160 ° F). Charge the reaction vessel (over a period of about 2-20 minutes) with 266-532 grams of sodium silicate (having a mole ratio of $SiO_2$ to $Na_2O$ of 3.26 and a pH of 11.2). Stir the contents in the reaction vessel for another 10-180 minutes. Then, remove the contents from the reaction vessel and separate the colloidal silica product from ion exchange resin via a filter bag.

Table 1. Lab-scale Samples Prepared via Batch Method (Comparative Samples 1-6) or Inventive Semi-batch Method (Samples 7-8, 1015 and Comparative Sample 9)

| Sample | SiO$_2$ Addition, Batch ("B") or Semi-batch ("S") | Colloidal Silica Solids concentration (wt %) | pH | Viscosity (mPas) (cP) | Conductivity, $\mu$S/cm | Specific Surface Area (m$^2$/g) | S-value (%) |
|---|---|---|---|---|---|---|---|
| 1 | B | 16.02 | 10.26 | 41.2 | 5560 | 831 | 25.8 |
| 2 | B | 16.37 | 10.46 | 22.2 | 6610 | 850 | 27.2 |
| 3 | B | 16.05 | 11.13 | 50 | 10260 | 870 | 18.9 |
| 4 | B | 16.49 | 10.78 | 25 | 6870 | 869 | 26.5 |
| 5 | B | 16.68 | 10.14 | 25 | 6710 | 888 | 27.9 |
| 6 | B | 17.07 | n/a | 58 | n/a | n/a | 28.0 |
| 7 | S | 16.80 | 10.48 | 5.46 | 7210 | 832 | 33.1 |
| 8 | S | 16.5 | 10.22 | 10.3 | 6400 | 836 | 33.1 |
| 9 | S | 16.4 | 10.11 | 13.2 | 5330 | 719 | 32.6 |
| 10 | S | 16.4 | 10.39 | 9.2 | 6180 | 770 | 30.7 |
| 12 | S | 17.2 | 10.24 | 15.6 | 6700 | 836 | 29.6 |
| 13 | S | 16.5 | 9.9 | 16.5 | 5820 | 777 | 32.6 |
| 14 | S | 16.7 | 9.9 | 13.8 | 5810 | 789 | 34.8 |
| 15 | S | 17.1 | 10.21 | 11.4 | 6500 | 846 | 33.0 |

As can be seen from Table 1, the samples prepared by the conventional batch method that achieve at least 16% colloidal silica solids (e.g., Comparative Samples 1-6) all fail to meet the claimed upper limit related to viscosity. However, Samples 7-8, 1015 and Comparative Sample 9, prepared using the semi-batch method outlined herein, all unexpectedly achieved 16-18 weight percent colloidal silica solids while meeting the claim limitations recited for viscosity (4-20 mPas (cP)), S-value (26-40%), and specific surface area of the colloidal silica solids (750-850 m$^2$/g).

Example 2:

For Example 2, inventive aqueous colloidal silica products (Samples 16-17, 19-29 and Comparative Sample 18 in Table 2) were prepared using the following pilot-scale semi-batch procedure. Charge a reaction vessel with 700.3 liter (185 gallons) of Amberlite® IRC84SP ion exchange resin (available from Dow) in its sodium form. Following manufacturer's procedure for regenerating the resin to the hydrogen form such that the regeneration is at least 40 percent complete. Rinse the resin clean with water and drain the water. Charge 309.80-525.25 kg (683-1158 lbs) of water into the vessel and start mixing the contents of the vessel to suspend the resin. Next, heat the contents of the reactor to 37.77-71.11 (100-160 degrees F). Charge the reaction vessel (over a period of about 2-20 minutes) with 260.36-598.74 kg (574-1320 1bs) of sodium silicate (having a mole ratio of SiO$_2$ to Na$_2$O of 3.26 and a pH of 11.2). After 1-45 min, charge the reaction vessel (over a period of about 5-30 minutes) with 18.59-189.14 kg (41-417 1bs) of sodium silicate. Stir the contents in the reaction vessel for another 10-180 minutes. Then, remove the contents from the reaction vessel from the bottom through the screen.

**Table 2**: Pilot-scale Samples Prepared via Inventive Semi-batch Method

| Sample | Colloidal Silica Solids concentration (wt %) | pH | Viscosity (mPas) (cP) | Specific Surface Area (m$^2$/g) | S-value (%) |
|---|---|---|---|---|---|
| 16 | 17.8 | 10.7 | 11 | 766 | 34.0 |
| 17 | 17.3 | 10.6 | 14 | 773 | 30.9 |
| 18 | 17.3 | 10.6 | 15 | 720 | 33.0 |

(continued)

| Sample | Colloidal Silica Solids concentration (wt %) | pH | Viscosity (mPas) (cP) | Specific Surface Area (m$^2$/g) | S-value (%) |
|---|---|---|---|---|---|
| 19 | 16.7 | 10.7 | 11 | 773 | 29.7 |
| 20 | 17.4 | 10.7 | 11 | 762 | 35.0 |
| 21 | 17.1 | 10.6 | 20 | 788 | 30.0 |
| 22 | 17.4 | 10.7 | 18 | 801 | 27.0 |
| 23 | 17.1 | 10.7 | 20 | 793 | 29.0 |
| 24 | 17.2 | 10.8 | 12 | 812 | 32.0 |
| 25 | 17.0 | 10.6 | 9 | 758 | 34.0 |
| 26 | 17.1 | 10.7 | 10 | 780 | 33.4 |
| 27 | 17.2 | 10.7 | 13 | 777 | 31.1 |
| 28 | 16.8 | 10.7 | 9 | 782 | 33.6 |
| 29 | 16.9 | 10.6 | 11 | 785 | 33.0 |

As can be seen from Table 2, each of the pilot-scale samples achieved the claimed parameters even with colloidal silica solids as high as about 18% (Sample 16).

Example 3:

A control sample, Samples 17 and 19 and comparative Sample 18 of Example 2 were utilized in comparison experiments related to first pass ash retention of each. Each of the samples were dosed onto a cellulosic furnish.

As can be seen, a 90% first pass ash retention can be achieved using approximately 0.5 to 0.8 as much microparticle dosage (FPAR replacement ratio) for each of Samples 17 and 19 and Comparative Sample 18, as compared to the control sample. These results are graphically demonstrated in FIG. 1.

| | First Pass Ash Retention (%) | | | | |
|---|---|---|---|---|---|
| Microparticle Dosage, kg microparticles per 1000 kg (lb microparicles/ton) | Control | Sample 17 | Sample 18 | Sample 19 | |
| 0 | 73.5 | 73.5 | 73.5 | 73.5 | |
| 0.11 (0.25) | 79.2 | 76.3 | 76.7 | 79.1 | |
| 0.22 (0.5) | 80.5 | 82.7 | 83.0 | 84.0 | |
| 0.45 (1) | 85.5 | 90.4 | 88.2 | 90.4 | |
| 0.68 (1.5) | 89.3 | 95.1 | 94.9 | 94.6 | |
| 0.90 (2) | 92.2 | 94.8 | 94.9 | 96.9 | |

As can be seen, the inventive aqueous colloidal silica products prepared using the inventive production method provided superior results compared to the control sample.

To the extent that the terms "include," "includes," or "including" are used in the specification or the claims, they are intended to be inclusive in a manner similar to the term "comprising" as that term is interpreted when employed as a transitional word in a claim. Furthermore, to the extent that the term "or" is employed (e.g., A or B), it is intended to mean "A or B or both A and B." When the applicants intend to indicate "only A or B but not both," then the term "only A or B but not both" will be employed. Thus, use of the term "or" herein is the inclusive, and not the exclusive use. Also, to the extent that the terms "in" or "into" are used in the specification or the claims, it is intended to additionally mean "on" or "onto."

**Claims**

1. An aqueous colloidal silica product comprising water and from 16 to 18 weight percent colloidal silica solids, wherein the aqueous colloidal silica product has a viscosity ranging from 4 to 20 mPa·s (cps) and an S-value ranging from 26 to 40%, wherein the colloidal silica solids have a specific surface area ranging from 750 to 850 m$^2$/g.

2. The aqueous colloidal silica product of claim 1, further comprising an alkali metal,
   preferably wherein the alkali metal is present in an amount sufficient to provide a molar ratio of silica to alkali metal ranging from 50:1 to 5:1

3. The aqueous colloidal silica product of claim 1, wherein the aqueous colloidal silica product has a viscosity ranging from 4 to 18 mPa·s (cps),
   or wherein the aqueous colloidal silica product comprises from 17 to 18 weight percent colloidal silica solids,
   or wherein the aqueous colloidal silica product has a ratio of weight percent colloidal silica solids to cps viscosity ranging from 1:2 to 4:1.

4. The aqueous colloidal silica product of claim 1, wherein the aqueous colloidal silica product has a pH ranging from 9 to 11,
   preferably wherein the aqueous colloidal silica product has a pH ranging from 10 to 11.

5. A method of producing an aqueous colloidal silica product, the method comprising:

   first, adding a first quantity of alkali metal silicate to water and a partially regenerated cationic ion exchange resin under agitation, thereby forming a first intermediate composition comprising a first portion of aqueous colloidal silica product, wherein the first intermediate composition has a temperature ranging from 38 to 71 °C (100 to 160 degrees Fahrenheit) and a pH ranging from 8 to 14, and the first quantity of alkali metal silicate is added at a first rate sufficient to allow the first addition to last for 1 to 45 minutes;
   second, after 0 to 90 minutes, adding a second quantity of alkali metal silicate to the first intermediate composition under agitation, thereby forming a second intermediate composition comprising a second portion of aqueous colloidal silica product, wherein the second intermediate composition has a temperature ranging from 38 to 71 °C (100 to 160 degrees Fahrenheit) and a pH ranging from 9 to 11, and the second quantity of alkali metal silicate is added at a second rate sufficient to allow the second addition to last for 5 to 120 minutes;
   after 0 minutes to 24 hours, separating the first and second portions of aqueous colloidal silica products from the second intermediate composition, thereby producing the aqueous colloidal silica product;
   wherein the first quantity and the second quantity comprise a total quantity, the first quantity ranging from 60 to 95 weight percent of the total quantity.

6. The method of claim 5, wherein the first and second portions of aqueous silica products are separated from the second intermediate composition via filtration using a screen or slotted pipe.

7. The method of claim 5, wherein the second intermediate composition is allowed to agitate for a time ranging from 0 minutes to 75 minutes.

8. The method of claim 5, wherein the first intermediate composition has a pH ranging from 9 to 11.

9. The method of claim 5, wherein the first rate is sufficient to allow the addition of the first quantity of alkali metal silicate to last from 2 to 10 minutes,
   and/or wherein the second rate is sufficient to allow the addition of the second quantity of alkali metal silicate to last from 10 to 40 minutes.

10. A method of making a cellulosic sheet, the method comprising:

    preparing a cellulosic furnish containing from 0.01 to 1.5 weight percent cellulosic fiber;
    adding to the cellulosic furnish an amount of the aqueous colloidal silica product of claim 1 sufficient to achieve a concentration of colloidal silica solids of from 0.00005 to 1.5 weight percent per dry weight of fiber in the cellulosic furnish, and an amount of a water soluble polymeric flocculant sufficient to achieve a concentration of water soluble polymeric flocculant of from 0.001 to 5 weight percent per dry weight of fiber in the cellulosic furnish, wherein the water soluble polymeric flocculant has a molecular weight ranging from 500,000 to 30 million daltons; and

dewatering the cellulosic furnish to obtain a cellulosic sheet.

11. The method of claim 10, wherein the amount of the aqueous colloidal silica product added to the cellulosic furnish is sufficient to achieve a colloidal silica solids concentration of from 0.005 to 1 weight percent per dry weight of fiber in the cellulosic furnish.

12. The method of claim 10, wherein the colloidal silica product has a first pass ash retention replacement ratio ranging from 0.5 to 0.8 relative to a batch aqueous colloidal silica product.

13. The method of claim 10, wherein the colloidal silica product achieves a first pass ash retention of at least 90% relative to a batch aqueous colloidal silica product when dosing microparticles into the cellulosic furnish at a concentration of 0.40 to 0.54 kg per 1000 kg (0.9 to 1.2 pounds per ton) dry weight of fiber in the cellulosic furnish.

14. The method of claim 10, wherein a cationic starch is added to the cellulosic furnish in an amount sufficient to achieve a concentration of cationic starch of from 0.005 to 5 weight percent cationic starch per dry weight of fiber in the cellulosic furnish.

**Patentansprüche**

1. Wässriges kolloidales Siliciumdioxiderzeugnis, das Wasser und von 16 bis 18 Gew.-% kolloidale Siliciumdioxidfeststoffe umfasst, wobei das wässrige kolloidale Siliciumdioxiderzeugnis eine Viskosität, die von 4 bis 20 mPa·s (cps) reicht, und einen S-Wert, der von 26 bis 40 % reicht, aufweist; wobei die kolloidalen Siliciumdioxidfeststoffe eine spezifische Oberfläche, die von 750 bis 850 m$^2$/g reicht, aufweisen.

2. Wässriges kolloidales Siliciumdioxiderzeugnis nach Anspruch 1, das ferner ein Alkalimetall umfasst, vorzugsweise wobei das Alkalimetall in einem Umfang vorliegt, der ausreicht, um ein Molverhältnis von Siliciumdioxid zu Alkalimetall, das von 50:1 bis 5:1 reicht, bereitzustellen.

3. Wässriges kolloidales Siliciumdioxiderzeugnis nach Anspruch 1, wobei das wässrige kolloidale Siliciumdioxiderzeugnis eine Viskosität, die von 4 bis 18 Pa·s (cps) reicht, aufweist, oder wobei das wässrige kolloidale Siliciumdioxiderzeugnis von 17 bis 18 Gew.-% kolloidale Siliciumdioxidfeststoffe umfasst, oder wobei das wässrige kolloidale Siliciumdioxiderzeugnis ein Gewichtsverhältnis von kolloidalen Siliciumdioxidfeststoffen zu cps-Viskosität, das von 1:2 bis 4:1 reicht, aufweist.

4. Wässriges kolloidales Siliciumdioxiderzeugnis nach Anspruch 1, wobei das wässrige kolloidale Siliciumdioxiderzeugnis einen pH-Wert, der von 9 bis 11 reicht, aufweist, vorzugsweise wobei das wässrige kolloidale Siliciumdioxiderzeugnis einen pH-Wert, der von 10 bis 11 reicht, aufweist.

5. Verfahren zum Erzeugen eines wässrigen kolloidalen Siliciumdioxiderzeugnisses, wobei das Verfahren Folgendes umfasst:

Erstens, Zugeben einer ersten Menge an Alkalimetallsilicat zu Wasser und eines teilweise regenerierten kationischen Ionenaustauscherharzes unter Rühren, wobei dadurch eine erste Zwischenzusammensetzung ausgebildet wird, die einen ersten Anteil eines wässrigen kolloidalen Siliciumdioxiderzeugnisses umfasst, wobei die erste Zwischenzusammensetzung eine Temperatur, die von 38 bis 71 °C (100 bis 160 Grad Fahrenheit) reicht, und einen pH-Wert, der von 8 bis 14 reicht, aufweist, und die erste Menge an Alkalimetallsilikat mit einer ersten Rate zugegeben wird, die ausreicht, um die erste Zugabe für 1 bis 45 Minuten dauern zu lassen;
Zweitens, nach 0 bis 90 Minuten, Zugeben einer zweiten Menge an Alkalimetallsilicat zu der ersten Zwischenzusammensetzung unter Rühren, wobei dadurch eine zweite Zwischenzusammensetzung ausgebildet wird, die einen zweiten Anteil eines wässrigen kolloidalen Siliciumdioxiderzeugnisses umfasst, wobei die zweite Zwischenzusammensetzung eine Temperatur, die von 38 bis 71 °C (100 bis 160 Grad Fahrenheit) reicht, und einen pH-Wert, der von 9 bis 11 reicht, aufweist, und die zweite Menge an Alkalimetallsilikat mit einer zweiten Rate zugegeben wird, die ausreicht, um die zweite Zugabe für 5 bis 120 Minuten dauern zu lassen;
nach 0 Minuten bis 24 Stunden, Trennen des ersten und des zweiten Anteils des wässrigen kolloidalen Siliciumdioxiderzeugnisses von der zweiten Zwischenzusammensetzung, wobei dadurch das wässrige kolloidale Siliciumdioxiderzeugnis erzeugt wird;

wobei die erste Menge und die zweite Menge eine Gesamtmenge umfassen, wobei die erste Menge von 60 bis 95 Gew-.% der Gesamtmenge reicht.

6. Verfahren nach Anspruch 5, wobei der erste und der zweite Anteil von wässrigen Siliciumdioxiderzeugnissen durch Filtration unter Verwendung eines Siebs oder eines geschlitzten Rohrs von der zweiten Zwischenzusammensetzung getrennt werden.

7. Verfahren nach Anspruch 5, wobei die zweite Zwischenzusammensetzung für eine Zeitspanne, die von 0 Minuten bis 75 Minuten reicht, gelassen wird.

8. Verfahren nach Anspruch 5, wobei die erste Zwischenzusammensetzung einen pH-Wert, der von 9 bis 11 reicht, aufweist.

9. Verfahren nach Anspruch 5, wobei die erste Rate ausreicht, um die Zugabe der ersten Menge an Alkalimetallsilicat von 2 bis 10 Minuten lang dauern zu lassen, und/oder wobei die zweite Rate ausreicht, um die Zugabe der zweiten Menge an Alkalimetallsilikat von 10 bis 40 Minuten lang dauern zu lassen.

10. Verfahren zum Herstellen einer Cellulosefolie, wobei das Verfahren Folgendes umfasst:

Herstellen eines Cellulosestoffeintrags, der von 0,01 bis 1,5 Gew.-% Cellulosefaser enthält;
Zugeben zu dem Cellulosestoffeintrag einen Umfang des wässrigen kolloidalen Siliciumdioxiderzeugnisses nach Anspruch 1, der ausreicht, um eine Konzentration an kolloidalen Siliciumdioxidfeststoffen von 0,00005 bis 1,5 Gew.-% pro Trockengewicht von Faser in dem Cellulosestoffeintrag zu erreichen, und einen Umfang eines wasserlöslichen polymeren Flockungsmittels, der ausreicht, um eine Konzentration an wasserlöslichem polymerem Flockungsmittel von 0,001 bis 5 Gew.-% pro Trockengewicht der Faser in dem Cellulosestoffeintrag zu erreichen, wobei das wasserlösliche polymere Flockungsmittel eine Molekularmasse, die von 500.000 bis 30 Millionen Dalton reicht, aufweist; und
Entwässern des Cellulosestoffeintrags, um eine Cellulosefolie zu erhalten.

11. Verfahren nach Anspruch 10, wobei der Umfang des wässrigen kolloidalen Siliciumdioxiderzeugnisses, das dem Cellulosestoffeintrag zugegeben wird, ausreicht, um eine kolloidale Siliciumdioxidfeststoffkonzentration von 0,005 bis 1 Gew.-% pro Trockengewicht von Faser in dem Cellulosestoffeintrag zu erreichen.

12. Verfahren nach Anspruch 10, wobei das kolloidale Siliciumdioxiderzeugnis ein Ascherückhaltungsersatzverhältnis in einem ersten Durchgang, das von 0,5 bis 0,8 reicht, relativ zu einem wässrigen kolloidalen Batch-Siliciumdioxiderzeugnis aufweist.

13. Verfahren nach Anspruch 10, wobei das kolloidale Siliciumdioxiderzeugnis eine Ascherückhaltung in einem ersten Durchgang von wenigstens 90 % relativ zu einem wässrigen kolloidalen Batch-Siliciumdioxiderzeugnis erreicht, wenn Mikropartikel in den Cellulosestoffeintrag bei einer Konzentration von 0,40 bis 0,54 kg pro 1000 kg (0,9 bis 1,2 Pfund pro Tonne) Trockengewicht von Faser in dem Cellulosestoffeintrag dosiert werden.

14. Verfahren nach Anspruch 10, wobei die kationische Stärke einem Cellulosestoffeintrag in einem Umfang zugegeben wird, der ausreicht, um eine Konzentration an kationischer Stärke von 0,005 bis 5 Gew.-% kationischer Stärke pro Trockengewicht von Faser in dem Cellulosestoffeintrag zu erreichen.

**Revendications**

1. Produit aqueux de silice colloïdale comprenant de l'eau et de 16 à 18 pour cent en poids de silice colloïdale solide, le produit aqueux de silice colloïdale présentant une viscosité comprise entre 4 et 20 mPa-s (cps) et une valeur S comprise entre 26 et 40 %, dans lequel les solides de silice colloïdale comportent une surface spécifique comprise entre 750 et 850 m$^2$/g.

2. Produit aqueux de silice colloïdale selon la revendication 1, comprenant en outre un métal alcalin, de préférence dans lequel le métal alcalin est présent en une quantité suffisante pour fournir un rapport molaire entre la silice et le métal alcalin compris entre 50:1 et 5:1.

**3.** Produit aqueux de silice colloïdale selon la revendication 1, le produit aqueux de silice colloïdale présentant une viscosité comprise entre 4 et 18 Pa-s (cps),
ou le produit aqueux de silice colloïdale comprenant de 17 à 18 pour cent en poids de solides de silice colloïdale,
ou le produit aqueux de silice colloïdale présentant un rapport entre le pourcentage en poids de solides de silice colloïdale et la viscosité cps compris entre 1:2 et 4:1.

**4.** Produit aqueux de silice colloïdale selon la revendication 1, le produit aqueux de silice colloïdale ayant un pH compris entre 9 et 11, de préférence le produit aqueux de silice colloïdale ayant un pH compris entre 10 et 11.

**5.** Procédé de production d'un produit aqueux de silice colloïdale, le procédé comprenant :

premièrement, l'addition d'une première quantité de silicate de métal alcalin à l'eau et d'une résine échangeuse d'ions cationiques partiellement régénérée sous agitation, formant ainsi une première composition intermédiaire comprenant une première partie de produit aqueux de silice colloïdale, dans lequel la première composition intermédiaire a une température comprise entre 38 et 71 °C (100 et 160 degrés Fahrenheit) et un pH compris entre 8 et 14, et la première quantité de silicate de métal alcalin est ajoutée à un premier taux suffisant pour permettre à la première addition de durer de 1 à 45 minutes ;
deuxièmement, après 0 à 90 minutes, l'addition d'une seconde quantité de silicate de métal alcalin à la première composition intermédiaire sous agitation, formant ainsi une seconde composition intermédiaire comprenant une seconde partie de produit aqueux de silice colloïdale, dans lequel la seconde composition intermédiaire a une température comprise entre 38 et 71 °C (100 et 160 degrés Fahrenheit) et un pH compris entre 9 et 11, et la seconde quantité de silicate de métal alcalin est ajoutée à un second taux suffisant pour permettre à la seconde addition de durer de 5 à 120 minutes ;
après 0 minute à 24 heures, la séparation des première et seconde parties de produits aqueux de silice colloïdale de la seconde composition intermédiaire, produisant ainsi le produit aqueux de silice colloïdale ;
dans lequel la première quantité et la seconde quantité comprennent une quantité totale, la première quantité étant comprise entre 60 et 95 % en poids de la quantité totale.

**6.** Procédé selon la revendication 5, dans lequel les première et seconde parties de produits aqueux de silice sont séparées de la seconde composition intermédiaire par filtration à l'aide d'un tamis ou d'un tuyau à fentes.

**7.** Procédé selon la revendication 5, dans lequel la seconde composition intermédiaire est soumise à une agitation pendant une durée comprise entre 0 minute et 75 minutes.

**8.** Procédé selon la revendication 5, dans lequel la première composition intermédiaire a un pH compris entre 9 et 11.

**9.** Procédé selon la revendication 5, dans lequel le premier taux est suffisant pour permettre à l'addition de la première quantité de silicate de métal alcalin de durer 2 à 10 minutes,
et/ou dans lequel le second taux est suffisant pour permettre à l'addition de la seconde quantité de silicate de métal alcalin de durer de 10 à 40 minutes.

**10.** Procédé de fabrication d'une feuille cellulosique, le procédé comprenant :

la préparation d'une composition cellulosique contenant 0,01 à 1,5 % en poids de fibre cellulosique ;
l'addition à la composition cellulosique d'une quantité du produit aqueux de silice colloïdale de la revendication 1 suffisante pour obtenir une concentration de solides de silice colloïdale de 0,00005 à 1,5 % en poids par poids sec de fibre dans la composition cellulosique, et une quantité d'un floculant polymère soluble dans l'eau suffisante pour obtenir une concentration de floculant polymère soluble dans l'eau de 0,001 à 5 % en poids par poids sec de fibre dans la composition cellulosique, dans lequel le floculant polymère soluble dans l'eau a un poids moléculaire compris entre 500 000 et 30 millions de daltons ; et
la déshydratation de la composition cellulosique afin d'obtenir une feuille cellulosique.

**11.** Procédé selon la revendication 10, dans lequel la quantité du produit aqueux de silice colloïdale ajoutée à la composition cellulosique est suffisante pour obtenir une concentration en solides de silice colloïdale de 0,005 à 1 % en poids par poids sec de fibre dans la composition cellulosique.

**12.** Procédé selon la revendication 10, dans lequel le produit de silice colloïdale présente un rapport de remplacement de rétention des cendres de premier passage compris entre 0,5 et 0,8 par rapport à un produit de silice colloïdale aqueux discontinu.

13. Procédé selon la revendication 10, dans lequel le produit de silice colloïdale atteint une première rétention de cendres de passage d'au moins 90 % par rapport à un produit aqueux de silice colloïdale en lot lors du dosage de microparticules dans la composition cellulosique à une concentration de 0,40 à 0,54 kg pour 1000 kg (0,9 à 1,2 livres par tonne) de poids sec de fibre dans la composition cellulosique.

14. Procédé selon la revendication 10, dans lequel un amidon cationique est ajouté à la composition cellulosique en une quantité suffisante pour obtenir une concentration d'amidon cationique de 0,005 à 5 pour cent en poids d'amidon cationique par poids sec de fibre dans la composition cellulosique.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0066492 A1
- US 6372089 A1
- US 6372806 B
- US 6372089 B
- US 5368833 A

### Non-patent literature cited in the description

- **RALPH K. ILER.** The Chemistry of Silica: Solubility, Polymerization, Colloid and Surface Properties and Biochemistry of Silica. John Wiley and Sons, Inc, 1979
- Kirk-Othmer Encyclopedia of Chemical Technology. Wiley, John & Sons, Inc, 2005
- **WJ KOROS et al.** *Journal of Membrane Science,* 1996, vol. 120, 149-159
- **GARY A. SMOOK.** Handbook for Pulp and Paper Technologists